# EUROPEAN PATENT APPLICATION

(11) **EP 4 437 844 A1**
(43) Date of publication of application: **02.10.2024**
(21) Application number: 24151973.5
(22) Date of filing: 15.01.2024
(51) Int. Cl.: A01K 89/01

(54) **FISHING SPINNING REEL**

(30) Priority: 27.03.2023 JP 2023050184
(71) Applicant: Globeride, Inc., Higashikurume-shi, Tokyo 203-8511 (JP)
(72) Inventor: TSUTSUMI, Wataru, Higashikurume-shi, 203-8511 (JP)
(74) Representative: Boult Wade Tennant LLP

(57) **Abstract**

A fishing spinning reel (1) according to one embodiment of the present invention comprises a reel body (2); and a spool (3) comprising a fishing line winding drum portion (4) having a cylindrical shape which is provided on the reel body and around which a fishing line is wound, a front flange (14) having a ring shape and rising outward in a radial direction from a front end of the fishing line winding drum portion, a rear flange (15) having a ring shape and rising outward in the radial direction from a rear end of the fishing line winding drum portion, and a skirt portion (16) having a substantially cylindrical shape and extending rearward from the rear flange. The rear flange of the spool is provided with an escape portion (20) for allowing the fishing line to escape.

## Description

### BACKGROUND OF THE INVENTION

### 1. TECHNICAL FIELD

The present invention relates to a fishing spinning reel.

### 2. DESCRIPTION OF THE RELATED ART

A fishing spinning reel comprising, on a reel body, a rotor, a spool, a rotor drive mechanism for rotating the rotor, and a reciprocating mechanism for moving the spool in a front-rear direction along a rotation axis to wind a fishing line around the spool has been known.

### RELEVANT REFERENCES

### LIST OF RELEVANT PATENT LITERATURE

Patent Literature 1: Japanese Application Publication No. H9-9828

### SUMMARY OF THE INVENTION

JP H9-9828 A discloses a configuration of a spinning reel including a reel body including an opening on one side and mounted on a fishing rod; a handle shaft rotatably supported by the reel body; a spool reciprocatably supported by the reel body and having a fishing line wound around an outer periphery; a rotor that is rotatably supported by the reel body, that guides the fishing line to the outer periphery of the spool, and that covers a part of an upper space of the opening of the reel body; a master gear accommodated in the reel body, fixed to the handle shaft to rotate the rotor, and extractable from the opening of the reel body; a cover body which closes a part of the opening of the reel body in a range not overlapping the rotor, by which one end side of the handle shaft is rotatably supported, and which is extractable from the opening; and a flange-shaped cover that closes the remaining opening not closed with the cover body, and that can be disposed in a retracted state where the master gear is extractable from the opening.

In the spinning reel according to JP H9-9828 A, a spool shaft and the spool reciprocate in a front-rear direction along a rotation axis, and the fishing line guided to the spool by a bail and a line roller is evenly wound around the outer periphery of the spool in the front-rear direction; however, in the spinning reel as in JP H9-9828 A, since the winding position of the fishing line changes and the line winding state changes between when the winding of the fishing line is performed with a high load and when the winding of the fishing line is performed with a low load, depending on the type (for example, PE or fluorocarbon) of the fishing line, the fishing line accumulates on a skirt portion of the spool, and undergoes forward taper winding, so that a backlash is likely to occur during casting, which is a problem.

The present invention has been made in view of the above-described circumstances, and an object of the present invention is to provide a fishing spinning reel capable of preventing a fishing line from accumulating on a skirt portion of a spool and reducing the occurrence of a backlash during casting without undergoing forward taper winding even when the winding of the fishing line is performed with one of a high load and a low load. Other objects of the present invention will become apparent upon reference to the entirety of the present specification.

A fishing spinning reel according to one embodiment of the present invention comprises a reel body; and a spool comprising a fishing line winding drum portion having a cylindrical shape which is provided on the reel body and around which a fishing line is wound, a front flange having a ring shape and rising outward in a radial direction from a front end of the fishing line winding drum portion, a rear flange having a ring shape and rising outward in the radial direction from a rear end of the fishing line winding drum portion, and a skirt portion having a substantially cylindrical shape and extending rearward from the rear flange. The rear flange of the spool is provided with an escape portion for allowing the fishing line to escape.

In the fishing spinning reel according to one embodiment of the present invention, the escape portion is provided in a range of 10% to 30% of a radial length of the rear flange from a radially outer end of the rear flange when viewed in the radial direction of the spool.

In the fishing spinning reel according to one embodiment of the present invention, a length of the escape portion in an axial direction of the spool is in a range of 1.0 mm to 1.5 mm.

In the fishing spinning reel according to one embodiment of the present invention, a length of the escape portion in the radial direction of the spool is the same as or larger than a winding length of the fishing line, which is released when the fishing spinning reel is used, in the radial direction of the spool.

In the fishing spinning reel according to one embodiment of the present invention, the escape portion is an inclined portion that is inclined rearward in a front-rear direction of the spool with respect to the radial direction of the spool as the inclined portion extends outward in the radial direction of the spool.

In the fishing spinning reel according to one embodiment of the present invention, the escape portion is a step portion comprising a bottom portion and a wall portion. In addition, in the fishing spinning reel according to one embodiment of the present invention, the bottom portion is perpendicular or inclined with respect to the radial direction of the spool. In addition, in the fishing spinning reel according to one embodiment of the present invention, the wall portion extends in the same direction as an extending direction of the rear flange or is inclined with respect to the extending direction.

In the fishing spinning reel according to one embodiment of the present invention, an extending direction of the fishing line winding drum portion in a front-rear direction of the spool is inclined with respect to a front-rear movement direction of the spool. In addition, in the fishing spinning reel according to one embodiment of the present invention, the extending direction of the fishing line winding drum portion in the front-rear direction of the spool is such that a rear end side of the fishing line winding drum portion is inclined outward or inward in the radial direction of the spool with respect to the front-rear movement direction of the spool.

According to the above-described embodiment, it is possible to provide the fishing spinning reel capable of preventing the fishing line from accumulating on the skirt portion of the spool and reducing the occurrence of a backlash during casting without undergoing forward taper winding even when the winding of the fishing line is performed with one of a high load and a low load.

### BRIEF DESCRIPTION OF THE DRAWINGS

FIG. 1 is a view describing an overall configuration of a fishing spinning reel according to one embodiment of the present invention;
FIG. 2 is a schematic view describing a rear flange of a spool of the fishing spinning reel according to one embodiment of the present invention;
FIG. 3 is a schematic view describing the rear flange of the spool of the fishing spinning reel according to one embodiment of the present invention;
FIG. 4 is a schematic view describing the rear flange of the spool of the fishing spinning reel according to one embodiment of the present invention;
FIG. 5 is a schematic view describing a fishing line winding drum portion of the spool of the fishing spinning reel according to one embodiment of the present invention; and
FIG. 6 is a schematic view describing the fishing line winding drum portion of the spool of the fishing spinning reel according to one embodiment of the present invention.

### DETAILED DESCRIPTION

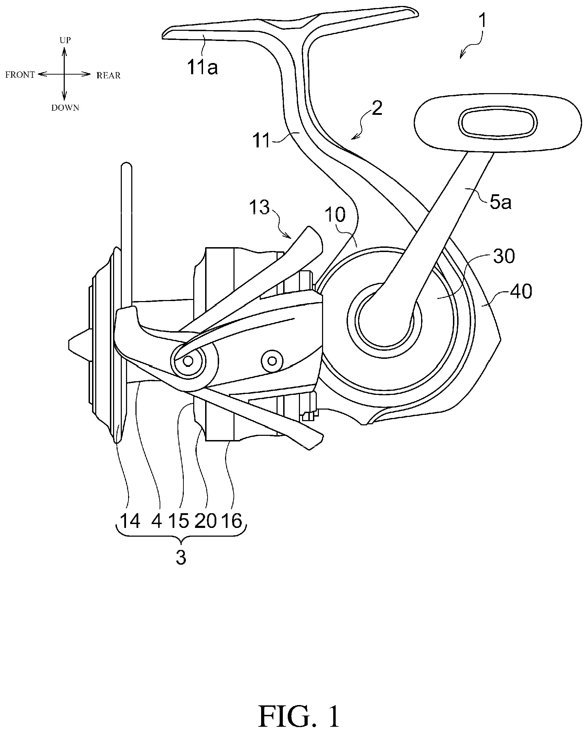

Hereinafter, one embodiment of a line stopping device of a fishing spinning reel according to one embodiment of the present invention will be specifically described with reference to the accompanying drawings. In the following description, "front and rear" and "up and down" referred to are defined based on directions illustrated in FIG. 1. Components that are common in a plurality of drawings are denoted by the same reference signs throughout the plurality of drawings. It should be noted that each drawing is not necessarily drawn to an accurate scale for the convenience of description.

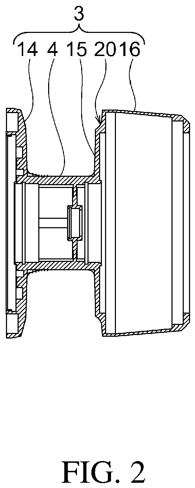

First, a basic configuration of a fishing spinning reel (fishing reel) 1 according to one embodiment of the present invention will be described with reference to FIG. 1. FIG. 1 illustrates an overall configuration of the fishing spinning reel according to one embodiment of the present invention. In FIG. 1, from the viewpoint of describing the basic configuration and the overall configuration of the fishing spinning reel (fishing reel) 1, the description of an escape portion 20 to be described later is omitted; however, the escape portion 20 will be described using each drawing from FIG. 2 onward. As illustrated in FIG. 1, the fishing spinning reel 1 according to one embodiment of the present invention comprises a reel body 2 to which an operating part (handle) 5a is assembled; a rotor 13 that is rotated by a winding operation of the handle 5a; and a spool 3 that is reciprocated in a front-rear direction by a winding operation of the handle 5a.

The reel body 2 is provided with a spool shaft extending forward and having the spool 3 attached to a front end, and a spool reciprocating device (not illustrated). When a winding operation of the handle 5a is performed, the spool reciprocating device moves the spool shaft forward and rearward, and the spool 3 attached to the spool shaft moves forward and rearward. In addition, a drag mechanism (not illustrated) is interposed between the spool shaft and the spool 3, and when a force larger than or equal to a drag force acts on a fishing line, the spool 3 rotates (rotationally moves) around the spool shaft.

As illustrated in FIG. 1, the spool 3 comprises a fishing line winding drum portion 4 having a cylindrical shape around which the fishing line is wound; a front flange 14 having a ring shape and rising outward in a radial direction from a front end (end on the front side in the front-rear direction) of the fishing line winding drum portion 4; a rear flange 15 having a ring shape and rising outward in the radial direction from a rear end (end on the rear side in the front-rear direction) of the fishing line winding drum portion 4; and a skirt portion 16 having a substantially cylindrical shape and extending rearward from the rear flange 15.

The reel body 2 comprises a body 10 in which a side opening (not illustrated) that is open toward the left side is formed; a leg portion 11 extending upward from the body 10 and having a rod attachment portion 11a formed at an upper end; a body front portion provided on a front side of the body 10; a lid member 30 that supports a handle shaft 5 while closing the side opening; and a protection cover 40 attached to a rear portion of the body 10. The body 10, the leg portion 11, and the body front portion are integrally made from a resin material or the like. In addition, each of the lid member 30 and the protection cover 40 is also made from a resin material or the like.

In addition, the body front portion has a tubular shape that is open in the front-rear direction, and a drive shaft tube and the spool shaft are assembled thereinside. A front end of the drive shaft tube and a front end of the spool shaft protrude forward from the body front portion. Furthermore, the rotor 13 is attached to the front end of the drive shaft tube, and the spool 3 is attached to the front end of the spool shaft. On the other hand, a rear end of the drive shaft tube and a rear end of the spool shaft are disposed inside the body 10. In addition, a pinion gear is integrally formed at a rear portion of the drive shaft tube.

Inside the body 10, as configurations for driving the drive shaft tube and the spool shaft through a winding operation of the handle 5a, the handle shaft 5 extending in a left-right direction (direction perpendicular to the drawing sheet of FIG. 1), a drive gear and a gear connected to the handle shaft 5, and the spool reciprocating device are accommodated.

The drive gear is a gear meshing with the pinion gear disposed on the front, a central portion of the drive gear is penetrated by the handle shaft 5, and the drive gear rotates around a rotation axis integrally with the handle shaft 5. In this way, when a winding operation of the handle 5a is performed, the handle shaft 5 and the drive gear rotate, a rotational driving force thereof is transmitted to the pinion gear, and the drive shaft tube and the rotor 13 rotate.

In addition, the gear is a gear formed integrally with the handle shaft 5, and meshes with an interlocking gear of the spool reciprocating device to transmit a rotational driving force to the interlocking gear through a winding operation of the handle 5a. The spool reciprocating device comprises a guide shaft extending in the front-rear direction; a slider that has a right side surface in which a guide groove is formed, and that moves along the guide shaft; and the interlocking gear in which an eccentric protrusion engaging with the guide groove is formed. In addition, the rear end of the spool shaft is fixed to the slider, and the slider and the spool shaft are integrated.

In this way, when the handle shaft 5 and a gear 6a are rotated by a winding operation of the handle 5a, the interlocking gear rotates. Then, the eccentric protrusion of the interlocking gear presses an inner surface of the guide groove of the slider, and a rotational movement is converted into a forward and rearward movement, thereby causing the slider and the spool shaft (spool 3) to reciprocate in the front-rear direction. An S-shaped cam oscillation mechanism has been described as an example of the spool reciprocating device (oscillation mechanism) described above; however, a worm shaft oscillation mechanism may be used.

Next, the fishing spinning reel 1 according to one embodiment of the present invention will be further described with reference to FIGS. 1 to 6. As illustrated in FIG. 1 and FIGS. 2 to 4, the fishing spinning reel 1 according to one embodiment of the present invention comprises the reel body 2; and the spool 3 comprising the fishing line winding drum portion 4 having a cylindrical shape which is provided on the reel body 2 and around which the fishing line is wound, the front flange 14 having a ring shape and rising outward in the radial direction (outward direction in the radial direction of the spool 3) from the front end (end on the front side of the spool 3 in the front-rear direction) of the fishing line winding drum portion 4, the rear flange 15 having a ring shape and rising outward in the radial direction (outward direction in the radial direction of the spool 3) from the rear end (end on the rear side of the spool 3 in the front-rear direction) of the fishing line winding drum portion, and the skirt portion 16 having a substantially cylindrical shape and extending rearward (rearward in the front-rear direction of the spool 3) from the rear flange 15. The rear flange 15 of the spool 3 is provided with the escape portion 20 for allowing the fishing line to escape. Here, "allowing the fishing line to escape" means a phenomenon where the line tends to be wound closer to a body side than the fishing line winding drum portion due to a decrease in the tension of the line.

According to the fishing spinning reel 1 according to one embodiment of the present invention, it is possible to provide the fishing spinning reel 1 capable of preventing the fishing line from accumulating on the skirt portion 16 of the spool 3 and reducing the occurrence of a backlash during casting without undergoing forward taper winding even when the winding of the fishing line is performed with one of a high load and a low load. More specifically, since the line is wound while collapsing on a skirt portion side, a line winding state can be maintained in a reverse taper.

In the fishing spinning reel 1 according to one embodiment of the present invention, the escape portion 20 is provided over a length in a range of 10% to 30% of a radial length of the rear flange 15 from a radially outer end of the rear flange 15 (when the outer end is considered to be a starting end of the escape portion 20) when viewed in the radial direction of the spool 3 (rear flange 15 of). In this way, by providing the escape portion corresponding to a ratio of a line winding depth where the fishing line is actually released during casting to a maximum radial depth of the rear flange (maximum fishing line winding depth), it is possible to provide the fishing spinning reel capable of more effectively preventing the fishing line from accumulating on the skirt portion of the spool and reducing the occurrence of a backlash during casting without undergoing forward taper winding even when the winding of the fishing line is performed with one of a high load and a low load.

In the fishing spinning reel 1 according to one embodiment of the present invention, a length of the escape portion 20 when viewed in an axial direction of the spool 3 is in a range of 1.0 mm to 1.5 mm. In this way, by providing the escape portion corresponding to the line winding depth where the fishing line is actually released during casting, it is possible to provide the fishing spinning reel capable of more reliably and accurately preventing the fishing line from accumulating on the skirt portion of the spool and reducing the occurrence of a backlash during casting without undergoing forward taper winding even when the winding of the fishing line is performed with one of a high load and a low load.

In the fishing spinning reel 1 according to one embodiment of the present invention, the length of the escape portion 20 in the radial direction of the spool 3 is the same as or larger than a winding (depth) length of the fishing line, which is released when the fishing spinning reel 1 is used, in the radial direction of the spool 3. In this way, by providing the escape portion corresponding to the line winding depth where the fishing line is actually released during casting, it is possible to provide the fishing spinning reel capable of more reliably and accurately preventing the fishing line from accumulating on the skirt portion of the spool and reducing the occurrence of a backlash during casting without undergoing forward taper winding even when the winding of the fishing line is performed with one of a high load and a low load.

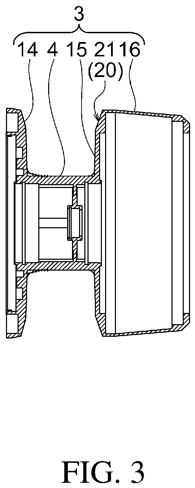

Next, as illustrated in FIG. 3, in the fishing spinning reel 1 according to one embodiment of the present invention, the escape portion 20 is an inclined portion 21 that is inclined rearward in the front-rear direction of the spool 3 with respect to the radial direction of the spool 3 as the inclined portion 21 extends outward in the radial direction of the spool 3. In this way, since the line can be widely guided to the fishing line winding drum portion, it is possible to provide the fishing spinning reel capable of more reliably and accurately preventing the fishing line from accumulating on the skirt portion 16 of the spool and reducing the occurrence of a backlash during casting without undergoing forward taper winding even when the winding of the fishing line is performed with one of a high load and a low load.

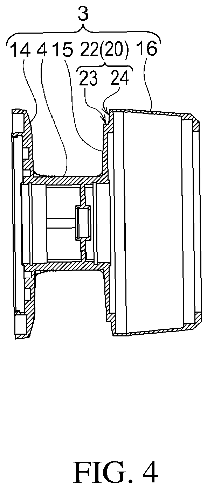

Next, as illustrated in FIG. 4, in the fishing spinning reel 1 according to one embodiment of the present invention, the escape portion 20 is a step portion 22 comprising a bottom portion 23 and a wall portion 24. In this way, since a large guide to the fishing line winding drum portion can be provided, it is possible to provide the fishing spinning reel capable of more reliably and accurately preventing the fishing line from accumulating on the skirt portion of the spool and reducing the occurrence of a backlash during casting without undergoing forward taper winding even when the winding of the fishing line is performed with one of a high load and a low load.

In addition, in the fishing spinning reel 1 according to one embodiment of the present invention, the bottom portion 23 is perpendicular (the case of FIG. 4) or inclined with respect to the radial direction of the spool 3. Sagging in a line winding state toward the rear can be actively formed by providing such a bottom portion. In addition, in the fishing spinning reel 1 according to one embodiment of the present invention, the wall portion 24 extends in the same direction as an extending direction of the rear flange (the case of FIG. 4) or is inclined with respect to the extending direction. A line winding state that does not hinder the release of the line can be formed by providing such a wall portion.

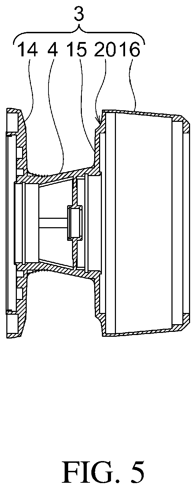

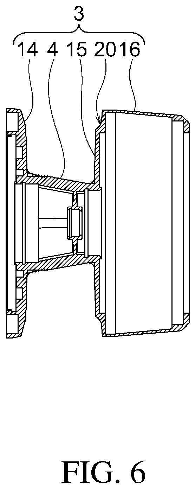

Next, as illustrated in FIGS. 5 and 6, in the fishing spinning reel 1 according to one embodiment of the present invention, an extending direction of the fishing line winding drum portion 4 when viewed in the front-rear direction of the spool 3 (direction from the front flange 14 toward the rear flange 15) is inclined with respect to a front-rear movement direction of the spool 3. In this way, a line winding state that does not hinder the release of the line can be formed.

In the fishing spinning reel 1 according to one embodiment of the present invention, the extending direction of the fishing line winding drum portion 4 of the spool 3 when viewed in the front-rear direction of the spool (direction from the front flange 14 toward the rear flange 15) is such that a rear end side (rear flange 15 side) of the fishing line winding drum portion 4 is inclined outward (in the case illustrated in FIG. 4, the shape of the fishing line winding drum portion 4 is referred to as a "forward taper") or inward (in the case illustrated in FIG. 4, the shape of the fishing line winding drum portion 4 is referred to as a "reverse taper") in the radial direction of the spool 3 with respect to the front-rear movement direction of the spool 3. When the shape of the fishing line winding drum portion 4 is a "forward taper", line release resistance can be reduced, and when the shape of the fishing line winding drum portion 4 is a "reverse taper", a backlash when the line is released can be suppressed.

The dimension, material, and disposition of each component described in the present specification are not limited to those explicitly described in the embodiment, and each component can be modified to have any dimension, material, and disposition that are within the scope of the present invention. In addition, components not explicitly described in the present specification can also be added to the described embodiment, or some of the components described in each embodiment can also be omitted.

### REFERENCE SIGNS LIST

- 1: Fishing spinning reel (fishing reel)
- 2: Reel body
- 3: Spool
- 4: Fishing line winding drum portion
- 5a: Handle (operating part)
- 10: Body
- 11: Leg portion
- 11a: Rod attachment portion
- 13: Rotor
- 14: Front flange
- 15: Rear flange
- 16: Skirt portion
- 20: Escape portion
- 21: Inclined portion
- 22: Step portion
- 23: Bottom portion
- 24: Wall portion
- 30: Lid member
- 40: Protection cover

## Claims

1. A fishing spinning reel comprising:
a reel body; and
a spool comprising a fishing line winding drum portion having a cylindrical shape which is provided on the reel body and around which a fishing line is wound, a front flange having a ring shape and rising outward in a radial direction from a front end of the fishing line winding drum portion, a rear flange having a ring shape and rising outward in the radial direction from a rear end of the fishing line winding drum portion, and a skirt portion having a substantially cylindrical shape and extending rearward from the rear flange,
wherein the rear flange of the spool is provided with an escape portion for allowing the fishing line to escape.

2. The fishing spinning reel according to claim 1, wherein the escape portion is provided in a range of 10% to 30% of a radial length of the rear flange from a radially outer end of the rear flange when viewed in the radial direction of the spool.

3. The fishing spinning reel according to claim 1, wherein a length of the escape portion in an axial direction of the spool is in a range of 1.0 mm to 1.5 mm.

4. The fishing spinning reel according to claim 1, wherein a length of the escape portion in the radial direction of the spool is the same as or larger than a winding length of the fishing line, which is released when the fishing spinning reel is used, in the radial direction of the spool.

5. The fishing spinning reel according to claim 1, wherein the escape portion is an inclined portion that is inclined rearward in a front-rear direction of the spool with respect to the radial direction of the spool as the inclined portion extends outward in the radial direction of the spool.

6. The fishing spinning reel according to claim 1, wherein the escape portion is a step portion comprising a bottom portion and a wall portion.

7. The fishing spinning reel according to claim 6, wherein the bottom portion is perpendicular or inclined with respect to the radial direction of the spool.

8. The fishing spinning reel according to claim 6, wherein the wall portion extends in the same direction as an extending direction of the rear flange or is inclined with respect to the extending direction.

9. The fishing spinning reel according to claim 1, wherein an extending direction of the fishing line winding drum portion in a front-rear direction of the spool is inclined with respect to a front-rear movement direction of the spool.

10. The fishing spinning reel according to claim 9, wherein the extending direction of the fishing line winding drum portion in the front-rear direction of the spool is such that a rear end side of the fishing line winding drum portion is inclined outward or inward in the radial direction of the spool with respect to the front-rear movement direction of the spool.
